# EUROPÄISCHE PATENTANMELDUNG

(11) **EP 3 092 922 A1**
(43) Veröffentlichungstag der Anmeldung: **16.11.2016**
(21) Anmeldenummer: 15176321.6
(22) Anmeldetag: 10.07.2015
(51) Int. Cl.: A47F 7/00, B60P 7/08

(54) **VORRICHTUNG ZUR AUFHÄNGUNG EINES TEILS EINES ZURRGURTES**

(30) Priorität: 06.05.2015 DE 202015102315 U
(71) Anmelder: Remmert, Klaus, 58840 Plettenberg (DE); Janssen, Oliver, 58840 Plettenberg (DE)
(72) Erfinder: Remmert, Klaus, 58840 Plettenberg (DE); Janssen, Oliver, 58840 Plettenberg (DE)
(74) Vertreter: Patentanwälte Dörner & Kötter PartG mbB

(57) **Zusammenfassung**

Die Erfindung betrifft eine Vorrichtung zur Aufhängung eines mit einer Ratsche versehenen Teils eines Zurrgurtes, die eine Aufnahme (1) für die Ratsche und einen Befestigungsabschnitt (2) aufweist, wobei der Befestigungsabschnitt (2) mit einem Teil eines Nutzfahrzeugaufbaus zusammenwirkt.

## Beschreibung

Zum Transport von Gütern im Straßenverkehr kommen unterschiedlichste Nutzfahrzeuge zum Einsatz. Weit verbreitet sind hierbei Nutzfahrzeuge mit Pritschenaufbau. Diese haben eine ebene Ladefläche, die von Bordwänden umgeben ist. Zum Schutz gegen Verschmutzung, Regen oder dergleichen ist die Ladefläche üblicherweise mit einem Planenaufbau abgedeckt. Der Planenaufbau besteht aus der Plane selbst, die von einer Konstruktion aus Rungen gebildet ist, zwischen denen Spriegel herausnehmbar angeordnet sind. Die Rungen sind in der Regel aus Stahl hergestellt; die Spriegel können aus Holz, Aluminium oder Stahl gefertigt sein.

Zur Sicherung der Ladung in Nutzfahrzeugen kommen verschiedenste Sicherungseinrichtungen zum Einsatz. Zum einen kann die Sicherung durch Zwischenwandverschlüsse oder Sperrbalken erfolgen, zum anderen sind auch Netze, die am Boden der Ladefläche befestigt werden, bekannt. Am weitesten verbreitet ist jedoch die Ladungssicherung mithilfe von Zurrgurten. Die Zurrgurte bestehen aus zwei Teilen, die jeweils an ihren einander abgewandten Enden mit Haken versehen sind, welche am Boden der Ladefläche beispielsweise in Zurrösen befestigt werden. Die beiden Zurrgurtteile weisen unterschiedliche Längen auf. Der kürzere Teil des Zurrgurtes ist an seinem dem anderen Teil zugewandten Ende mit einer Ratsche versehen, die einen Griff hat. Der längere Teil des Zurrgurtes wird durch die Ratsche hindurchgeführt. Es wird dann der Zurrgurt zunächst von Hand festgezurrt. Mit Hilfe der Ratsche wird dann die endgültige Spannkraft erzeugt, welche zur Sicherung der Ladung führt.

Die Sicherung der Ladung mit Hilfe von Zurrgurten hat sich bewährt und stellt somit eine zuverlässige Art der Sicherung der Ladung dar. Problematisch bei der Verwendung der Zurrgurte ist jedoch insbesondere, dass diese im Falle der Nichtbenutzung lose auf der Ladefläche umherliegen. Soweit es den längeren Teil des Zurrgurtes betrifft, ist dies in der Regel unproblematisch. Anders stellt sich dies bei dem kürzeren und mit der Ratsche versehenen Teil dar. Hier tritt das Problem auf, dass die Ratsche aufgrund ihres Gewichts dazu neigt, auf dem Ladenboden bei Fahrzeugbewegungen durch Beschleunigung, Lenkbewegungen oder Fahrbahnunebenheiten hin und her zu rutschen. Um eine damit einhergehende Beschädigung der Ratsche zu verhindern, ist es bei den Nutzfahrzeugführern üblich, den kürzeren Teil des Zurrgurtes mit dem an seinem einen Ende befindlichen Haken an den Spriegeln aufzuhängen, um auf diese Weise das Hin- und Herrutschen auf dem Ladeboden zu vermeiden.

Die beschriebene Vorgehensweise weist jedoch den Nachteil auf, dass die Ratsche an der Bordwand nach unten hängt und aufgrund der Fahrzeugbewegungen ständig hin und her schwingt. Dabei schlägt die Ratsche regelmäßig gegen die Spriegel oder gegen eine Runge, so dass eine Beschädigung der Ratsche auch bei dieser Vorgehensweise nicht ausgeschlossen werden kann. Hinzu kommt, dass die Ratsche an der Plane des Nutzfahrzeugs entlang scheuert bzw. auch gegen die Plane schlägt. Dies kann zu Beschädigungen der Plane führen, was hohe Reparaturkosten bis hin zu einem vollständigen Austausch der Plane zur Folge hat.

Hier will die Erfindung Abhilfe schaffen. Der Erfindung liegt die Aufgabe zu Grunde, eine Vorrichtung zur Aufhängung eines mit einer Ratsche versehenen Teils eines Zurrgurtes zu schaffen, die einerseits eine Beschädigung der Ratsche und andererseits eine Beschädigung der Plane durch das Schwingen der Ratsche im nicht bestimmungsgemäß eingesetzten Zustand vermeidet. Gemäß der Erfindung wird diese Aufgabe durch eine Vorrichtung zur Aufhängung eines mit einer Ratsche versehenen Teils eines Zurrgurtes geschaffen, die eine Aufnahme für die Ratsche und einen Befestigungsabschnitt aufweist, wobei der Befestigungsabschnitt mit einem Teil des Nutzfahrzeugaufbaus zusammenwi rkt.

Mit der Erfindung ist eine Vorrichtung zur Aufhängung eines mit einer Ratsche versehenen Teils eines Zurrgurtes geschaffen, welche eine Beschädigung der Ratsche im nicht verzurrten Zustand des Zurrgurtes vermeidet. Dies ist dadurch hervorgerufen, dass die Vorrichtung eine Aufnahme für die Ratsche aufweist, in der die Ratsche im nicht verzurrten Zustand angeordnet werden kann. Es besteht daher bei Fahrzeugbewegungen nicht die Gefahr, dass die Ratsche wie sonst üblich an dem Haken des Zurrgurtes aufgehängt an der Bordwand entlangschwingt und dabei die Plane beschädigt bzw. selbst beschädigt wird.

In Weiterbildung der Erfindung weist die Aufnahme eine bogenförmige Gestalt auf. Diese Gestaltung führt zu einer zuverlässigen Anordnung der Ratsche in der Aufnahme. Die bogenförmige Gestalt der Aufnahme ermöglicht ein passgenaues Einhängen der Ratsche mit ihrem Griff.

Vorteilhaft weist der Befestigungsabschnitt eine Lasche auf, an dessen einen Ende die Aufnahme angeordnet ist. Die Lasche bietet die Möglichkeit einer Verankerung des Befestigungsabschnitts an dem Nutzfahrzeugaufbau.

Bevorzugt ist auf der der Aufnahme abgewandten Seite der Lasche ein Einhängehaken vorgesehen. Mit Hilfe des Einhängehakens erfolgt eine Befestigung der Vorrichtung an den Spriegeln des Nutzfahrzeugaufbaus. Diese Art der Befestigung kann lösbar sein, so dass die Vorrichtung ohne großen Aufwand an einer anderen Position des Nutzfahrzeugaufbaus montierbar ist.

In vorteilhafter Ausgestaltung der Erfindung ist die Lasche mit mindestens einer Bohrung versehen. Diese Ausgestaltung bietet die Möglichkeit, die Vorrichtung unmittelbar an einem Spriegel beispielsweise durch Verschrauben nicht lösbar anzubringen.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: a) die Ansicht einer Vorrichtung in einer ersten Ausbildung;
b) die Seitenansicht von links der Vorrichtung;
c) die Draufsicht auf die Vorrichtung;
d) die dreidimensionale Darstellung der Vorrichtung;
- Figur 2: a) die Ansicht einer Vorrichtung in einer weiteren Ausbildung;
b) die Seitenansicht von links der Vorrichtung;
c) die Draufsicht auf die Vorrichtung;
d) die dreidimensionale Darstellung der Vorrichtung;
- Figur 3: a) die Ansicht einer Vorrichtung in einer anderen Ausbildung;
b) die Seitenansicht von links der Vorrichtung;
c) die Draufsicht auf die Vorrichtung;
d) die dreidimensionale Darstellung der Vorrichtung;
- Figur 4: die Seitenansicht von links einer Vorrichtung in einer zusätzlichen Ausbildung.

Die erfindungsgemäße Vorrichtung zur Aufhängung eines mit einer Ratsche versehenen Teils eines Zurrgurtes weist eine Aufnahme 1 für die Ratsche auf sowie einen Befestigungsabschnitt 2. Der Befestigungsabschnitt 2 wirkt mit einem - nicht dargestellten - Teil eines Nutzfahrzeugaufbaus zusammen. Bei dem Teil des Nutzfahrzeugaufbaus handelt es sich in der Regel um einen Spriegel, der zwischen zwei Rungen herausnehmbar angeordnet ist.

Die Aufnahme 1 weist eine bogenförmige Gestalt auf. In den Ausführungsbeispielen hat sie eine im Querschnitt im Wesentlichen halbkreisförmige Gestaltung. Andere Gestaltungen, beispielsweise eine ovale Gestaltung, sind ebenfalls möglich. Die Aufnahme 1 bildet das dem Boden zugewandte Ende der Vorrichtung.

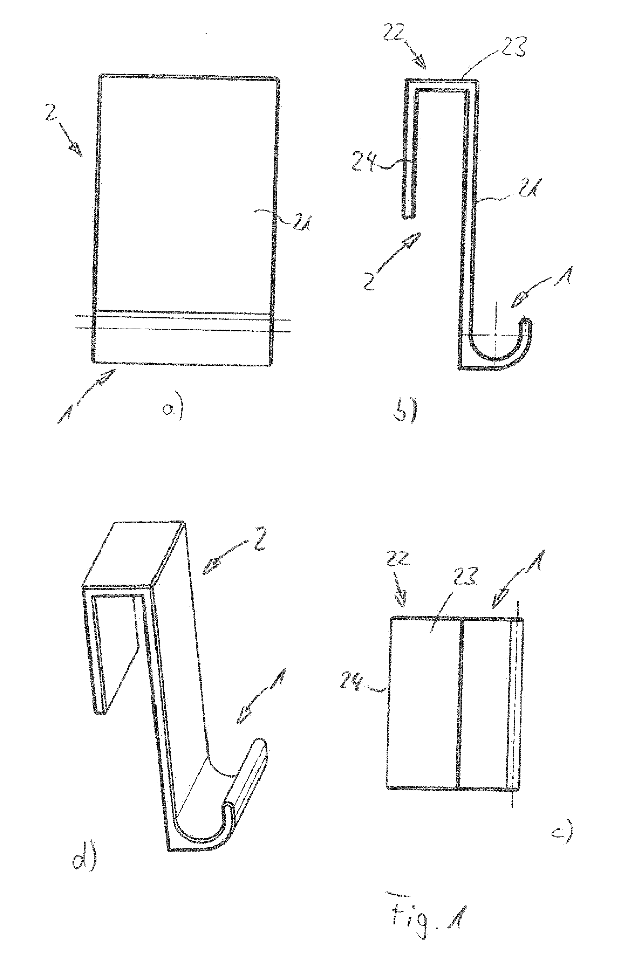

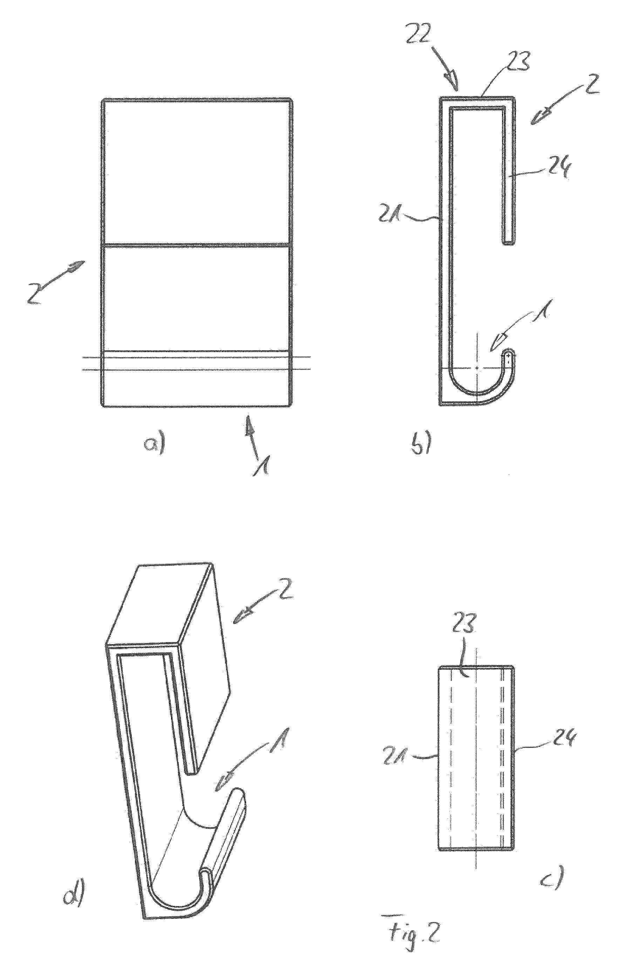

Der Befestigungsabschnitt 2 weist eine Lasche 21 auf, an dessen einen Ende die Aufnahme 1 angeordnet ist. Bei der Lasche 21 handelt es sich um ein flaches, rechteckförmiges Teil, welches in montiertem Zustand in Kontakt mit dem Spriegel steht. Auf der der Aufnahme 1 abgewandten Seite der Lasche 21 ist in den Ausführungsbeispielen nach den Figuren 1 und 2 ein Einhängehaken 22 vorgesehen. Der Einhängehaken 22 bildet in diesem Fall das dem Boden abgewandte Ende der Vorrichtung. Der Einhängehaken 22 hat einen im Wesentlichen U-förmigen Querschnitt, wobei das dem Einhängehaken 22 zugewandte Ende der Lasche 21 einen Schenkel des Einhängehakens 22 bildet.

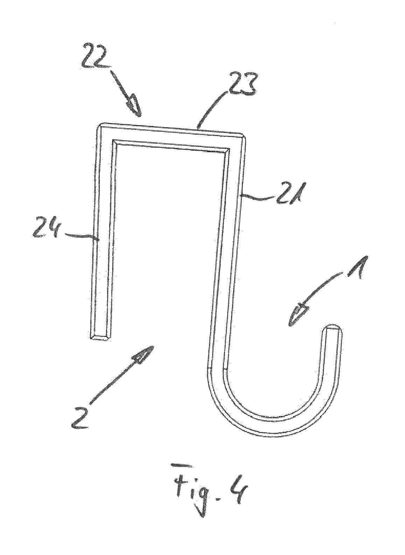

An die Lasche 21 schließt sich rechtwinklig ein Grund 23 an, der die Lasche 21 mit einem Schenkel 24 verbindet. Im Ausführungsbeispiel nach Figur 1 ist der Schenkel 24 rechtwinklig zum Grund 23 ausgerichtet. In Abwandlung dieses Ausführungsbeispiels ist der Schenkel 24 im Ausführungsbeispiel nach Figur 4 nicht rechtwinklig an den Grund 23 angebunden; die Lasche 21 und der Schenkel 24 sind nicht parallel zueinander ausgerichtet. Auf diese Weise besteht die Möglichkeit, durch den Schenkel 24 eine Vorspannung hervorzurufen, wodurch beim Einhängen der Vorrichtung eine verbesserte Klemmwirkung erzielt ist.

In den Ausführungsbeispielen nach den Figuren 1 und 4 ist der Einhängehaken 22 in die entgegengesetzte Richtung der Aufnahme 1 ausgerichtet. Diese Ausbildung bewirkt, dass im eingehängten Zustand der Vorrichtung die Aufnahme 1 in den Laderaum hineinragt. Im Ausführungsbeispiel nach Figur 2 ist dagegen der Einhängehaken 22 in dieselbe Richtung ausgerichtet, wie die Aufnahme 1. Hierdurch ist bewirkt, dass die Aufnahme 1 in eingehängtem Zustand der Vorrichtung unmittelbar unterhalb des jeweiligen Spriegels angeordnet ist, so dass die Aufnahme 1 nicht in den Laderaum hineinragt und folglich auch nicht das Be- und Entladen des Nutzfahrzeugs behindert.

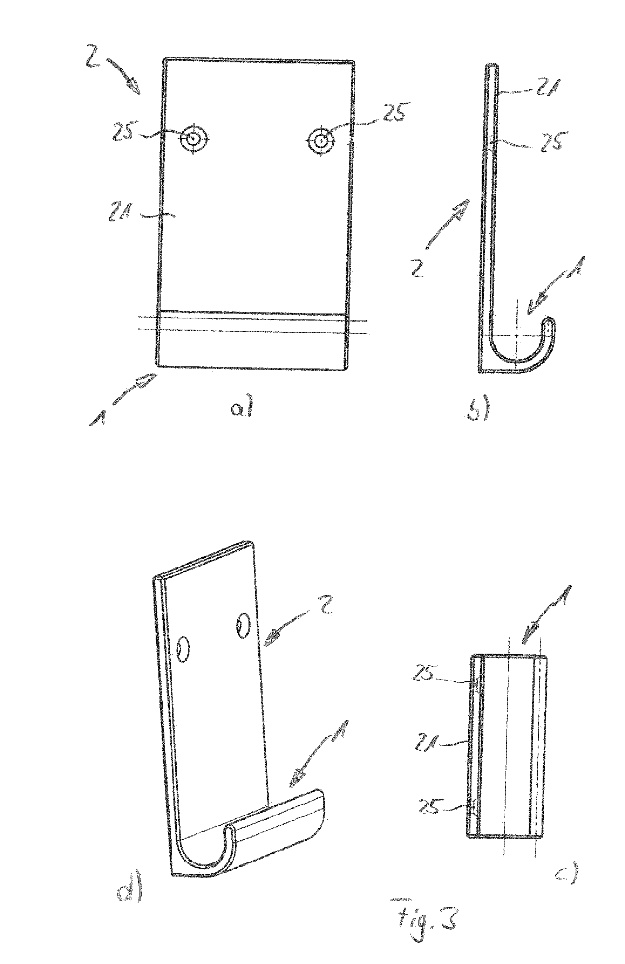

Im Ausführungsbeispiel nach Figur 3 ist kein Einhängehaken 22 vorgesehen. Stattdessen ist die Lasche 21 mit im Ausführungsbeispiel zwei Bohrungen 25 versehen. Mit Hilfe der Bohrungen 25 kann die Vorrichtung mit einem Spriegel oder einem anderen Bauteil des Nutzfahrzeugaufbaus verschraubt werden. Diese Ausbildung eignet sich auch für die Anwendung in Nutzfahrzeugen mit festen Kofferaufbauten, da durch die Verschraubung das Erfordernis eines Spriegels entbehrlich ist.

In einer weiteren - nicht dargestellten - Variante besteht darüber hinaus die Möglichkeit, die Vorrichtung unmittelbar an einen Spriegel anzuformen. Die Vorrichtung selbst hat in diesem Fall eine Ausgestaltung, welche im Wesentlichen derjenigen des Ausführungsbeispiels nach Figur 3 entspricht, wobei die Lasche 21 dann keine Bohrungen aufweisen muss. Die Vorrichtung ist in diesem Fall unverlierbar und ortsfest an dem Spriegel angeordnet.

Die erfindungsgemäße Vorrichtung ist vorzugsweise aus Metall hergestellt. Hier kann es sich um einfaches Stahlblech handeln, welches in einer Umformmaschine in die jeweilige Form gebracht werden kann. Alternativ besteht auch die Möglichkeit, die Vorrichtung aus Kunststoff herzustellen. Zur Erhöhung der Stabilität können hier auch glasfaserverstärkte Kunststoffe zum Einsatz kommen.

Mit der erfindungsgemäßen Vorrichtung ist eine sichere Aufhängung des mit einer Ratsche versehenen Teils eines Zurrgurtes möglich. Die Vorrichtung kann in einfacher Weise mit dem Einhängehaken 22 über einen Spriegel gestülpt werden. Die Ratsche kann dann ebenso einfach mit ihrem Griff in die Aufnahme 1 eingehängt werden. Soweit der Schenkel 24 und die Lasche 21 nicht parallel zueinander ausgerichtet sind, sondern der Schenkel 24 leicht in Richtung der Lasche 21 geneigt ist, wie dies im Ausführungsbeispiel nach Figur 4 dargestellt ist, erfolgt beim Einhängen der Vorrichtung eine Vorspannung, die eine zuverlässige Anordnung der Vorrichtung an dem Spriegel ermöglicht. Im Ausführungsbeispiel nach Figur 3 erfolgt die zuverlässige Anordnung durch Verschrauben.

In jedem Falle ist mit der erfindungsgemäßen Vorrichtung verhindert, dass die Ratsche aufgrund von Fahrzeugbewegungen an der Plane bzw. den Spriegeln oder der Bordwand entlang scheuert und dadurch entweder die Ratsche oder die Plane bzw. die Spriegel beschädigt werden. Da die Ratsche des Zurrgurtes in einfacher Weise an die Vorrichtung angehängt wird, ist die Bedienung identisch zu dem bisher gewählten Vorgehen eines Aufhängens an dem Haken des mit der Ratsche versehenen Zurrgurtes. Somit ist keine Umgewöhnung des Bedienpersonals bei der Handhabung erforderlich.

## Patentansprüche

1. Vorrichtung zur Aufhängung eines mit einer Ratsche versehenen Teils eines Zurrgurtes, die eine Aufnahme (1) für die Ratsche und einen Befestigungsabschnitt (2) aufweist, wobei der Befestigungsabschnitt (2) mit einem Teil eines Nutzfahrzeugaufbaus zusammenwirkt.

2. Vorrichtung nach Anspruch 1, **dadurch gekennzeichnet, dass** die Aufnahme (1) eine bogenförmige Gestalt aufweist.

3. Vorrichtung nach Anspruch 1 oder 2, **dadurch gekennzeichnet, dass** der Befestigungsabschnitt (2) eine Lasche (21) aufweist, an dessen einen Ende die Aufnahme (1) angeordnet ist.

4. Vorrichtung nach einem oder mehreren der vorgenannten Ansprüche, **dadurch gekennzeichnet, dass** auf der der Aufnahme (1) abgewandten Seite der Lasche (21) ein Einhängehaken (22) vorgesehen ist.

5. Vorrichtung nach einem oder mehreren der vorgenannten Ansprüche, **dadurch gekennzeichnet, dass** die Lasche (21) mit mindestens einer Bohrung (25) versehen ist.
